# EUROPÄISCHE PATENTSCHRIFT

(11) **EP 3 600 926 B1**
(45) Veröffentlichungstag und Bekanntmachung des Hinweises auf die Patenterteilung: **28.04.2021**
(21) Anmeldenummer: 18713809.4
(22) Anmeldetag: 07.03.2018
(51) Int. Cl.: B60H 1/00, B61D 27/00

(54) **LUFTKANAL ZUM EINBAU IN EIN FAHRZEUG**
AIR DUCT FOR INSTALLATION IN A VEHICLE
CONDUIT D'AIR À MONTER DANS UN VÉHICULE

(30) Priorität: 31.03.2017 DE 102017205527
(43) Veröffentlichungstag der Anmeldung: 05.02.2020
(73) Patentinhaber: Siemens Mobility GmbH, 81739 München (DE)
(72) Erfinder: ROHWERDER, Dirk, 45549 Sprockhövel (DE)
(86) Internationale Anmeldenummer: PCT/EP2018/055566
(87) Internationale Veröffentlichungsnummer: WO 2018/177704

(56) Entgegenhaltungen:
- EP-A1- 2 957 476
- DE-A1-102015 109 090
- JP-A- S62 137 216

## Beschreibung

Die Erfindung bezieht sich auf einen Luftkanal zum Einbau in ein Fahrzeug zur Personenbeförderung, mit einem Hauptkanal zum Führen von Luft in einer Hauptrichtung und mit einer an den Hauptkanal angeschlossenen Umlenkvorrichtung zum Umlenken von aus dem Hauptkanal anströmender Luft in eine von der Hauptrichtung verschiedene Zuführungsrichtung.

Solche Luftkanäle sind beispielsweise von Schienenfahrzeugen oder Bussen bekannt, die mit einem Klimasystem ausgestattet sind, um beispielsweise Frischluft in einen Fahrzeuginnenraum zu verbringen. Dabei verläuft der Hauptkanal typischer Weise längs des Fahrzeugs, während die vorgesehene Umlenkvorrichtung Luftanteile aus dem Hauptkanal in Richtung auf Luftauslässe in den Fahrzeuginnenraum führt. Ausführungsbeispiele dafür sind aus der JP S62 137 216 A und der EP 2 957 476 A1 bekannt. Eine Umlenkvorrichtung ist beispielsweise als Luftverteilbox realisiert, die an den Hauptkanal angeschlossen ist und über verstellbare Klappen eine Umlenkung der anströmenden Luft bewirkt.

Ein solcher Luftkanal ist beispielsweise aus Blechen aufgebaut, wobei Luftführungen separat montiert werden, so dass sich ein hoher Montageaufwand ergibt. Zudem ist aus der DE 10 2015 109 090 A1 ein Luftkanal bekannt, der mittels eines Twinsheet-Verfahrens aus zwei Halbschalen hergestellt ist.

Eine besondere Problematik ergibt sich beim Einbau von Luftkanälen in doppelstöckige Fahrzeuge, beispielsweise Schienenfahrzeuge. Dort steht insbesondere im Oberdeck sehr wenig Bauraum zur Verfügung. Neben einer Gepäckablage müssen auch Verkleidungsteile und die vorgesehenen Luftkanäle hinsichtlich der Ausnutzung des verfügbaren Bauraumes miteinander harmonisieren.

Ausgehend hiervon liegt der Erfindung die Aufgabe zu Grunde, einen Luftkanal zum Einsatz bei Fahrzeugen, insbesondere Schienenfahrzeugen, anzugeben, der aufwandsarm zu montieren und bauraumsparend ist.

Diese Aufgabe wird bei dem eingangs genannten Luftkanal dadurch gelöst, dass er eine Mehrzahl an vorgefertigten, aus einem thermoplastischen Kunststoff in einem Twinsheet-Verfahren hergestellte Kanalmodule mit Hauptkanalabschnitten aufweist und die Kanalmodule in der Hauptströmungsrichtung unmittelbar aneinander anschließbar sind, wobei bei jedem Kanalmodul die Umlenkeinrichtung in das betreffende Kanalmodul integriert ist und ein Mundstück aufweist, das seitlich an einen Hauptkanalabschnitt des Kanalmoduls angesetzt ist.

In dieser Weise wird der Luftkanal in Modulbauweise realisiert, wobei insbesondere das zum Einsatz kommende Twinsheet-Verfahren bauraumsparende Lösungen für den Luftkanal ermöglicht. Bei einem Twinsheet-Verfahren handelt es sich um ein Vakuum-Tiefziehverfahren (Thermoformen), mit zwei in einer Ausgangsposition übereinanderliegenden Platten. Beim Twinsheet-Verfahren werden die zwei Platten entweder nacheinander oder gleichzeitig mit Wärme beaufschlagt und anschließend umgeformt. Dabei bilden sich bei geeignet ausgewähltem Werkzeug Hohlkörper, die in ihrem Randbereich miteinander luftdicht verbunden sind.

Durch die Integration der Umlenkeinrichtung in das betreffende Kanalmodul entfällt eine im Stand der Technik erforderliche Montage der Umlenkeinrichtung an einem Hauptkanal, denn die Umlenkeinrichtung ist bereits in das Kanalmodul integriert und insbesondere in dem Twinsheet-Verfahren durch geeignete Auswahl von einzusetzenden Werkzeugen gleichzeitig mit dem Hauptkanal gefertigt.

Das Mundstück kann mehrere, in Hauptströmungsrichtung hintereinander angeordnete Trennwände aufweisen, die parallel zur Zuführungsrichtung ausgerichtet sind. Dabei kann die Zuführungsrichtung beispielsweise in einem senkrechten Winkel zur Hauptströmungsrichtung liegen. Die Trennwände bewirken eine Entnahme von Luftanteilen aus den Hauptkanalabschnitten der Kanalmodule und deren Umlenkung in die Zuführungsrichtung.

Das Mundstück kann an seiner ansonsten geschlossenen Stirnseite zum Auslass zugeführter Luft Luftausblasöffnungen aufweisen. Diese Luftaufblasöffnungen können in einer Reihe nebeneinander liegen. Wenn beabsichtigt ist, ein bestimmtes Luftaustrittsmuster zu realisieren, bei dem nicht über jede Luftausblasöffnung Luft in einen Fahrzeuginnenraum verbracht werden soll, kann eine ausgewählte Anzahl von Luftausblasöffnungen beispielsweise mit Hilfe geeigneter Stopfen verschlossen werden.

Die Kanalmodule können wenigstens auf ihrer einem Innenraum des Fahrzeugs zugeordneten Seite mit einer Wärmisolierung belegt sein. Dadurch ergibt sich eine günstige thermische Isolation zwischen dem Fahrzeuginnenraum und einer äußeren Umgebung des Fahrzeugs, in das der Luftkanal eingebaut ist.

Bei wenigstens einem der Kanalmodule kann dessen Hauptkanalabschnitt in seiner einem Innenraum des Fahrzeugs zugeordneten Seite eine Wartungsöffnung aufweisen. Dies vereinfacht etwaige Wartungstätigkeiten zur Aufrechterhaltung eines Betriebs des Luftkanals.

Bei wenigstens einem der Kanalmodule kann dessen Hauptkanalabschnitt an seiner einem Innenraum des Fahrzeugs zugeordneten Seite Halter aufweisen, die zur Anbindung einer Innenverkleidung vorgesehen sind. Bei diesem Ausführungsbeispiel sind die Kanalmodule bereits in vorgefertigtem Zustand vollständig dazu hergerichtet, dass eine vorgesehene Innenverkleidung in einfacher Weise angebracht werden kann.

Die Halter können bevorzugt jeweils mittels Klebeverbindungen teilweise an dem Hauptkanal und teilweise an der Umlenkeinrichtung befestigt sein. Der Luftkanal kann zudem innerhalb eines Fahrzeugrohbaus wie folgt montiert sein: Die Halter sind an rohbauseitigen C-Schienen mittels Nutensteinen befestigt. Alternativ ist es möglich, dass vom Rohbau aus eine Einnietmutter gesetzt wird, an die die Halter angeschraubt sind.

Zum Aufbau des Luftkanals kann jedes Kanalmodul Befestigungsmittel zum Anschluss eines benachbarten Kanalmoduls aufweisen.

Der Luftkanal eignet sich insbesondere auch dafür, im Oberdeck eines doppelstöckigen Fahrzeugs, insbesondere Schienenfahrzeugs, zum Einsatz zu kommen. In diesem Fall wird der Luftkanal bevorzugt in einem Voutenbereich, d.h. in einem Übergangsbereich zwischen Seitenwand und Decke. angeordnet sein.

Ein Ausführungsbeispiel der Erfindung wird nachfolgend unter Bezugnahme auf die Zeichnungen noch näher erläutert. Es zeigen:
- Figur 1: eine schematische perspektivische Ansicht eines Kanalmoduls zum Aufbau eines Luftkanals in einem Schienenfahrzeug und
- Figur 2: eine schematische Querschnittsansicht eines Mund-stücks des Kanalmoduls von Figur 1.

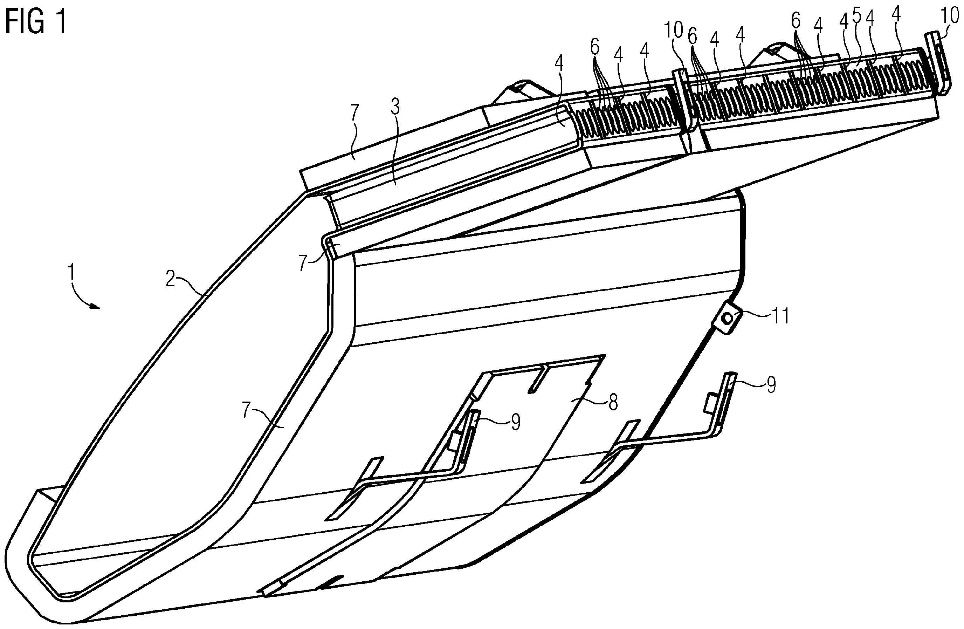

Das in der Figur 1 gezeigte Kanalmodul 1 zum Einbau beispielsweise in den Voutenbereich des Oberdecks eines doppelstöckigen Schienenfahrzeugs umfasst einen Hauptkanalabschnitt 2, der von einem Klimagerät gelieferte Luft, beispielsweise Kaltluft, in einer Hauptrichtung transportiert, die in Längsrichtung des Schienenfahrzeugs verläuft. An einen offenen Umfangsabschnitt des Hauptkanalabschnitts 2 ist seitlich ein Mundstück 3 angesetzt, das zum Umlenken von Luft aus dem Hauptkanalabschnitt 2 in etwa einem rechten Winkel in eine Zuführungsrichtung dient, in der ein Fahrgastinnenraum des Schienenfahrzeugs liegt. Eine Mehrzahl mit dem Kanalmodul 1 gleichartiger, in Hauptrichtung der Luftströmung hintereinander angeordneter Kanalmodule bildet einen vollständigen Luftkanal aus, der sich über eine gesamte Länge eines Wagens erstrecken kann.

Der Hauptkanalabschnitt 2 und das Mundstück 3 sind gemeinsam in einem Twinsheet-Verfahren aus zwei Platten aus thermoelastischem Kunststoff-Material hergestellt.

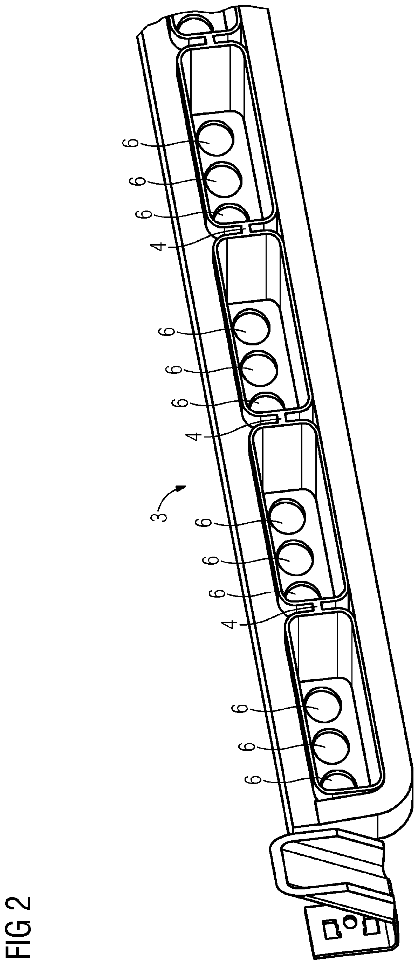

Das Mundstück 3 ist flach ausgebildet und weist einen rechtwinkligen, gleichbleibenden Querschnitt zwischen dem Übergangsbereich zwischen dem Hauptkanalabschnitt 2 und dem Mundstück 3 und einer Stirnseite 5 des Mundstücks 3 auf. Zur Umlenkung von Luft aus dem Hauptkanalabschnitt 2 weist das Mundstück 3 eine Anzahl Trennwände 4 (aus Gründen der Übersichtlichkeit sind nicht alle mit einer Bezugsziffer versehen) auf, die sich in Zuführungsrichtung von einem Übergangsbereich zwischen dem Hauptkanalabschnitt 2 und dem Mundstück 3 aus über die Länge des Mundstücks 3 bis zur Stirnseite 5 des Mundstücks 3 erstrecken (vgl. Figur 2). Die Stirnseite 5 ist an sich geschlossen, weist jedoch eine Anzahl Luftausblasöffnungen 6 auf, die in einer Reihe nebeneinander angeordnet sind, und zwar in der Hauptrichtung der Luftführung durch den Hauptkanalabschnitt 2.

Die Luftausblasöffnungen 6 (aus Gründen der Übersichtlichkeit sind nicht alle mit einer Bezugsziffer versehen) sind kreisförmig und können bedarfsweise mit geeigneten Stopfen verschlossen werden, so dass ein gewünschtes Luftaustrittsmuster in Längsrichtung des Luftkanals realisiert werden kann, zu dem das gezeigte Kanalmodul 1 gehört.

Das Kanalmodul 1 ist zudem mit einer thermischen Isolierung 7 versehen, die sowohl auf als auch unter dem Mundstück 3 sowie von dem Mundstück 3 aus entlang der Außenfläche des Hauptkanalabschnitts 2 vorgesehen ist. Dabei sind die Abschnitte der Isolierung unterhalb des Mundstücks 3 sowie entlang des Hauptkanalabschnitts 2 überwiegend einem Innenraum des Fahrzeugs zugewandt, in den das Kanalmodul 1 eingebaut ist.

Ebenfalls auf der einem Innenraum eines Fahrzeugs zugeordneten Seite des Hauptkanalabschnitts 2 ist eine Wartungsöffnung 8 vorgesehen, mit deren Hilfe im Inneren des Kanalmoduls 1 erforderliche Wartungsmaßnahmen durchführbar sind.

Auf derselben Seite des Hauptkanalabschnitts 2 sind zudem im vorliegenden Ausführungsbeispiel zwei geklebte Halter 9 vorgesehen, die zur Anbindung eines Verkleidungsbauteils dienen. Zum selben Zweck vorgesehene, weitere geklebte Halter 10 finden sich am Mundstück 3.

Zum Anschluss des Kanalmoduls 1 an ein benachbartes, gleichartiges Kanalmodul ist eine Befestigungsvorrichtung 11 vorgesehen Die Befestigungsvorrichtung 11 ist als Schraubverbindung ausgelegt. Diese soll jedoch die Kanalmodule 1 bei deren Montage nicht zusammenziehen, sondern nur sicherstellen, dass die Verbindung der Kanalmodule 1 untereinander unter einem ausgeübten Pressdruck zusammengehalten wird. Ebenso kann an diesen Befestigungsvorrichtungen 11 festgestellt werden, ob die Kanalmodule 1 genügend nahe zusammengesteckt sind, um eine geforderte Dichtigkeit für den aus den Kanalmodulen 1 aufgebauten Luftkanal sicherzustellen.

## Patentansprüche

1. Luftkanal zum Einbau in ein Fahrzeug zur Personenbeförderung, mit einem Hauptkanal zum Führen von Luft in einer Hauptrichtung und mit einer an den Hauptkanal angeschlossenen Umlenkvorrichtung zum Umlenken von aus dem Hauptkanal anströmender Luft in eine von der Hauptrichtung verschiedene Zuführungsrichtung,
**dadurch gekennzeichnet, dass**
der Luftkanal eine Mehrzahl an vorgefertigten, aus einem thermoplastischen Kunststoff in einem Twinsheet-Verfahren hergestellte Kanalmodule (1) mit Hauptkanalabschnitten (2) aufweist und die Kanalmodule (1) in der Hauptströmungsrichtung unmittelbar aneinander anschließbar sind, wobei bei jedem Kanalmodul (1) die Umlenkeinrichtung in das Kanalmodul integriert ist und ein Mundstück (3) aufweist, das seitlich an einen Hauptkanalabschnitt (2) des Kanalmoduls angesetzt ist.

2. Luftkanal nach Anspruch 1,
**dadurch gekennzeichnet, dass**
das Mundstück (3) mehrere, in Hauptströmungsrichtung hintereinander angeordnete Trennwände (4) aufweist, die parallel zur Zuführungsrichtung ausgerichtet sind.

3. Luftkanal nach einem der Ansprüche 1 oder 2,
**dadurch gekennzeichnet, dass**
das Mundstück (3) an seiner Stirnseite (5) zum Auslass zugeführter Luft Luftausblasöffnungen (6) aufweist.

4. Luftkanal nach Anspruch 3,
**dadurch gekennzeichnet, dass**
die Luftausblasöffnungen (6) in einer Reihe nebeneinander angeordnet sind.

5. Luftkanal nach einem der Ansprüche 1 bis 4,
**dadurch gekennzeichnet, dass**
die Kanalmodule (1) wenigstens auf ihrer einem Innenraum des Fahrzeugs zugeordneten Seite mit einer Wärmeisolierung (7) belegt sind.

6. Luftkanal nach einem der Ansprüche 1 bis 5,
**dadurch gekennzeichnet, dass**
bei wenigstes einem der Kanalmodule (1) dessen Hauptkanalabschnitt (2) an seiner einem Innenraum des Fahrzeugs zugeordneten Seite eine Wartungsöffnung (8) aufweist.

7. Luftkanal nach einem der Ansprüche 1 bis 6,
**dadurch gekennzeichnet, dass**
bei wenigstes einem der Kanalmodule (1) dessen Hauptkanalabschnitt an seiner einem Innenraum des Fahrzeugs zugeordneten Seite Halter (9, 10) aufweist, die zur Anbringung einer Innenverkleidung vorgesehen sind.

8. Luftkanal nach Anspruch 7,
**dadurch gekennzeichnet, dass**
die Halter (9, 10) jeweils mittels Klebeverbindungen teilweise an dem Hauptkanal und teilweise an der Umlenkeinrichtung befestigt sind.

9. Luftkanal nach einem der Ansprüche 1 bis 8,
**dadurch gekennzeichnet, dass**
jedes Kanalmodul (1) Befestigungsmittel (11) zum Anschluss eines benachbarten Kanalmoduls aufweist.

## Claims

1. Air duct for installation in a vehicle for passenger transport, with a main duct for conducting air in a main direction and with a deflection apparatus which is connected to the main duct for deflecting air which flows in from the main duct in a feed direction which is different from the main direction,
**characterized in that**
the air duct has a plurality of prefabricated duct modules (1) which are produced from a thermoplastic in a twin sheet method and have main duct sections (2), and the duct modules (1) can be connected directly to one another in the main flow direction, the deflection device being integrated into the duct module in the case of each duct module (1) and having an orifice piece (3) which is attached laterally to a main duct section (2) of the duct module.

2. Air duct according to Claim 1,
**characterized in that**
the orifice piece (3) has a plurality of dividing walls (4) which are arranged behind one another in the main flow direction and are oriented parallel to the feed direction.

3. Air duct according to either of Claims 1 and 2,
**characterized in that**,
on its end side (5), the orifice piece (3) has air outflow openings (6) for the output of air which is fed in.

4. Air duct according to Claim 3,
**characterized in that**
the air outflow openings (6) are arranged in a row next to one another.

5. Air duct according to one of Claims 1 to 4,
**characterized in that**
the duct modules (1) are coated with a thermal insulation (7) at least on their side which is assigned to an interior compartment of the vehicle.

6. Air duct according to one of Claims 1 to 5,
**characterized in that**,
in the case of at least one of the duct modules (1), its main duct section (2) has a maintenance opening (8) on its side which is assigned to an interior compartment of the vehicle.

7. Air duct according to one of Claims 1 to 6,
**characterized in that**,
in the case of at least one of the duct modules (1), its main duct section has holders (9, 10) on its side which is assigned to an interior compartment of the vehicle, which holders (9, 10) are provided for the attachment of an interior trim panel.

8. Air duct according to Claim 7,
**characterized in that**
the holders (9, 10) are fastened in each case by means of adhesive connections partially to the main duct and partially to the deflection device.

9. Air duct according to one of Claims 1 to 8,
**characterized in that**
each duct module (1) has fastening means (11) for the connection of an adjacent duct module.

## Revendications

1. Conduit pour de l'air à incorporer dans un véhicule de transport des voyageurs, comprenant un conduit principal pour conduire de l'air dans une direction principale et comprenant un dispositif de déviation, raccordé au conduit principal, pour dévier de l'air arrivant du conduit principal dans une direction d'amenée différente de la direction principale, **caractérisé en ce que**,
le conduit pour de l'air a une pluralité de modules (1) de conduit préfinis, fabriqués en une matière plastique thermoplastique dans un procédé Twinsheet et ayant des tronçons (2) de conduit principal et les modules (1) de conduit peuvent être raccordés l'un à l'autre directement dans la direction d'écoulement principale, dans lequel, pour chaque module (1) de conduit, le dispositif de déviation est intégré au module de conduit et a une pièce (3) d'embouchure, qui est mise latéralement sur un tronçon (2) de conduit principal du module de conduit.

2. Conduit pour de l'air suivant la revendication 1, **caractérisé en ce que**,
la pièce (3) d'embouchure a plusieurs parois (4) de séparation, qui sont disposées les unes derrière les autres dans la direction d'écoulement principal et qui sont orientées parallèlement à la direction d'amenée.

3. Conduit pour de l'air suivant l'une des revendications 1 ou 2,
**caractérisé en ce que**
la pièce (3) d'embouchure a, du côté (5) frontal, des ouvertures (6) d'insufflation d'air pour la sortie de l'air amené.

4. Conduit pour de l'air suivant la revendication 3,
**caractérisé en ce que**
les ouvertures (6) d'insufflation d'air sont disposées les unes à côté des autres en une rangée.

5. Conduit pour de l'air suivant l'une des revendications 1 à 4,
**caractérisé en ce que**
les modules (1) de conduit sont revêtus d'un isolant (7) thermique au moins du côté associé à un espace intérieur du véhicule.

6. Conduit pour de l'air suivant l'une des revendications 1 à 5,
**caractérisé en ce que**,
pour au moins l'un des modules (1) de conduit, son tronçon (2) de conduit principal a, du côté associé à l'espace intérieur du véhicule, une ouverture (8) d'entretien.

7. Conduit pour de l'air suivant l'une des revendications 1 à 6,
**caractérisé en ce que**,
pour au moins l'un des modules (1) de conduit, son tronçon de conduit principal a, du côté associé à un espace intérieur du véhicule, des appuis (9, 10) prévus pour le montage d'un habillage intérieur.

8. Conduit pour de l'air suivant la revendication 7,
**caractérisé en ce que**
les appuis (9, 10) sont fixés respectivement au moyen de collages en partie au conduit principal et en partie au dispositif de diffusion.

9. Conduit pour de l'air suivant l'une des revendications 1 à 8,
**caractérisé en ce que**
chaque module (1) de conduit a des moyens (11) de fixation pour le raccordement à un module de conduit voisin.
